# EUROPEAN PATENT APPLICATION

(11) **EP 2 360 856 A1**
(43) Date of publication of application: **24.08.2011**
(21) Application number: 09802393.0
(22) Date of filing: 21.07.2009
(51) Int. Cl.: H04B 10/00

(54) **A TRANSMISSION AND RECEIVING METHOD, DEVICE AND SYSTEM FOR USER SIGNAL**

(30) Priority: 30.07.2008 CN 200810129992
(71) Applicant: Huawei Technologies Co., Ltd., Longgang District, Shenzhen Guangdong 518129 (CN)
(72) Inventor: YE, Min, Shenzhen, P.R. China (CN); ZENG, Li, Shenzhen, P.R. China (CN)
(74) Representative: Kreuz, Georg Maria
(86) International application number: PCT/CN2009/072842
(87) International publication number: WO 2010/012200

(57) **Abstract**

A method, a device and a system for sending and receiving client signals are provided. The method for sending includes: distributing, in round-robin mode, OTU data frames into which client signals are encapsulated to VLs, in which the number of the VLs is a common multiple of the number of lanes of an OTN encapsulating module adaptation interface and the number of optical module adaptation lanes; inserting VL alignment identifiers that carry VL serial numbers and position information to the VLs, in which the VL alignment identifiers are adapted to compensate a transmission rate difference among the VLs; distributing, in bit-by-bit interleaving mode, the data on the VLs with the inserted VL alignment identifiers onto the OTN encapsulating module adaptation interface; converting data on the OTN encapsulating module adaptation interface by bit onto optical module adaptation lanes; modulating data on the optical module adaptation lanes and transmitting the modulated data onto an optical fiber for transmission, so as to compensate a transmission rate difference among different data lines caused by OTN long-distance transmission.

## Description

The application claims the benefit of priority to Chinese Patent Application No. 200810129992.2, entitled "METHOD, DEVICE AND SYSTEM FOR SENDING AND RECEIVING CLIENT SIGNALS", filed on July 30, 2008, which is incorporated herein by reference in its entirety.

### FIELD OF THE TECHNOLOGY

The present invention relates to the field of optical network, and more particularly to a method, a device and a system for sending and receiving client signals.

### BACKGROUND OF THE INVENTION

With the continuous improvement of the transmission rate, the Optical Transport Network (OTN) has become a common technology for long-distance transport. Currently, the OTN can transmit data at the rate of 40 Gb/s or lower. Ethernet data, as client signals of the OTN, have been developing towards higher rates. Moreover, as a bearer network, the OTN also needs to be adapted to transmission at a higher rate.

At a sending end of the OTN, an Optical Channel Transport Unit (OTU) frame output from an OTN encapsulating module needs to be electro-optically converted by an optical module. Inside the optical module, different modulation and encoding techniques are used, so lanes of different bit numbers are required to transmit data. For example, the Differential Quadrature Phase Shift Keying (DQPSK) technology requires a 4-bit lane, while the Return Zero Differential 8 Phase Shift Keying (RZ-D8PSK) technology requires a 3-bit lane.

At the sending end, a Serdes Framer Interface (SFI) is often used between the OTN encapsulating module and the optical module. In the high-speed OTN transmission, for example, transmission at the rate of 100 Gb/s or higher, the Optical Internetworking Forum (OIF) has defined the Scalable Serdes Framer Interface (SFI-S) protocol. The SFI-S has n data lines and one transmission rate difference compensation line. The transmission rate difference compensation line may be used to compensate the transmission rate difference caused by different lanes in the SFI-S. However, the transmission rate difference caused by the process of transporting a signal from an optical module to a receiving end equipment cannot be compensated by the transmission rate difference compensation line of the SFI-S.

### SUMMARY OF THE INVENTION

The present invention is directed to a method, a device and a system for sending and receiving client signals, which can compensate a transmission rate difference among different data lines caused by OTN long-distance transmission.

In an embodiment, the present invention provides a method for sending client signals. The method includes: distributing, in round-robin mode, OTU data frames into which client signals are encapsulated to virtual lanes (VLs) in which the number of the VLs is a common multiple of the number of lanes of an OTN encapsulating module adaptation interface and the number of optical module adaptation lanes; inserting VL alignment identifiers that carry VL serial numbers and position information to the VLs, in which the VL alignment identifiers are used to compensate a transmission rate difference among the VLs; distributing, in bit-by-bit interleaving mode, data on the VLs with the inserted VL alignment identifiers to lanes of the OTN encapsulating module adaptation interface; converting the data on the OTN encapsulating module adaptation interface by bit onto the optical module adaptation lanes; modulating the data on the optical module adaptation lanes and sending the modulated data onto an optical fiber for transmission.

In an embodiment, the present invention provides a device for sending client signals. The device includes a first data distributing unit, a VL alignment identifier inserting unit, a second data distributing unit, a first data converting unit, and a data modulating and sending unit. The first data distributing unit is configured to distribute, in round-robin mode, OTU data frames into which client signals are encapsulated to VLs, in which the number of the VLs is a common multiple of the number of lanes of an OTN encapsulating module adaptation interface and the number of optical module adaptation lanes. The VL alignment identifier inserting unit is configured to insert VL alignment identifiers that carry VL serial numbers and position information to the VLs, in which the VL alignment identifiers are used to compensate a transmission rate difference among the VLs. The second data distributing unit is configured to distribute, in bit-by-bit interleaving mode, data on the VLs with the inserted VL alignment identifiers to lanes of the OTN encapsulating module adaptation interface. The first data converting unit is configured to convert the data on the OTN encapsulating module adaptation interface by bit onto the optical module adaptation lanes. The data modulating and sending unit is configured to modulate the data on the optical module adaptation lanes and send the modulated data onto an optical fiber for transmission.

In an embodiment, the present invention provides a method for receiving client signals. The method includes: receiving data transmitted on an optical fiber, and demodulating the received data to obtain data on optical module adaptation lanes; converting the data on the optical module adaptation lanes by bit onto OTN decapsulating module adaptation lanes; distributing the data on the OTN decapsulating module adaptation lanes onto VLs by bit; correcting a sequence of the VLs according to VL serial numbers carried in VL alignment identifiers; aligning data among the VLs by position according to position information carried in the VL alignment identifiers; recovering the aligned data on the VLs to obtain OTU data frames into which client signals are encapsulated.

In an embodiment, the present invention also provides a device for receiving client signals. The device includes a data receiving and demodulating unit, a second data converting unit, a third data distributing unit, a sequence correcting unit, a data aligning unit, and a data recovering unit. The data receiving and demodulating unit is configured to receive data transmitted on an optical fiber, and demodulate the received data to obtain data on optical module adaptation lanes. The second data converting unit is configured to convert the data on the optical module adaptation lanes by bit onto OTN decapsulating module adaptation lanes. The third data distributing unit is configured to distribute the data on the OTN decapsulating module adaptation lanes onto VLs by bit. The sequence correcting unit is configured to correct a sequence of the VLs according to VL serial numbers carried in VL alignment identifiers. The data aligning unit is configured to align data among the VLs by position according to position information carried in the VL alignment identifiers. The data recovering unit is configured to recover the aligned data on the VLs to obtain OTU data frames into which client signals are encapsulated.

In an embodiment, the present invention provides a system for transmitting client signals. The system includes a device for sending client signals and a device for receiving client signals.

In the preceding solutions, at the sending end, according to the common multiple of the number of the lanes of the OTN encapsulating module adaptation interface and the number of the optical module adaptation lanes, a VL set with the number of lanes being the common multiple is created; the VL alignment identifiers are inserted to lanes of the VL set, and data on the lanes of the VL set with the inserted VL alignment identifiers are distributed, in bit-by-bit interleaving mode, to the lanes of the OTN encapsulating module adaptation interface; when the data on the OTN encapsulating module adaptation interface are converted by bit onto the optical module adaptation lanes, it is ensured that all bit data on one VL appear on a fixed optical module adaptation lane. Thus, if transmission delay among physical lanes occurs in long-distance transmission, data on one VL is not affected. Accordingly, data transported on the optical fiber are received at the receiving end, and the received data are demodulated to obtain data on optical module adaptation lanes; then, the data on the optical module adaptation lanes are converted by bit onto OTN decapsulating module adaptation lanes, and the data on the OTN decapsulating module adaptation lanes are distributed onto VLs by bit; if transmission delay of the data received at the receiving end occurs in long-distance transmission, the receiving end can correct the sequence of VL lanes according to serial numbers of the VL lanes carried in the VL alignment identifiers inserted in the lanes of the VL set by the sending end; the data among the VL lanes are aligned by position according to position information carried in the VL alignment identifiers to compensate the transmission rate difference caused by long-distance transmission, and finally, the aligned data on the lanes of the VL set are recovered to OTU data frames into which client signals are encapsulated.

### BRIEF DESCRIPTION OF THE DRAWINGS

FIG. 1 is a flow chart of a method for sending client signals according to an embodiment of the present invention;
FIG. 2 is a flow chart of a method for sending client signals according to another embodiment of the present invention;
FIG. 3 is a schematic diagram of a method for converting by bit;
FIG. 4 is a structural view of a device for sending client signals according to an embodiment of the present invention;
FIG. 5 is a flow chart of a method for receiving client signals according to an embodiment of the present invention;
FIG. 6 is a flow chart of a method for receiving client signals according to another embodiment of the present invention;
FIG. 7 is a schematic diagram of another method for converting by bit;
FIG. 8 is a flow chart of a device for receiving client signals according to an embodiment of the present invention;
FIG. 9-a shows data on lanes of a VL set at the sending end;

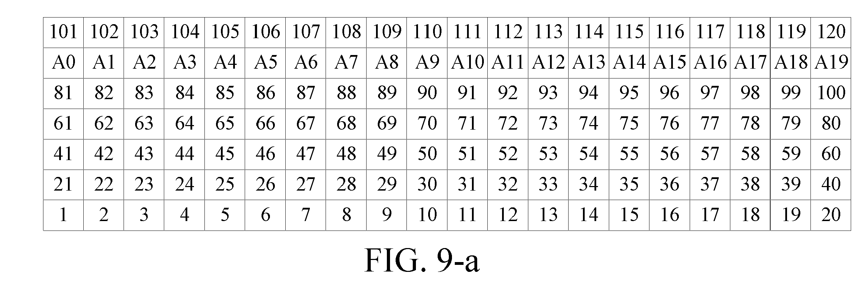

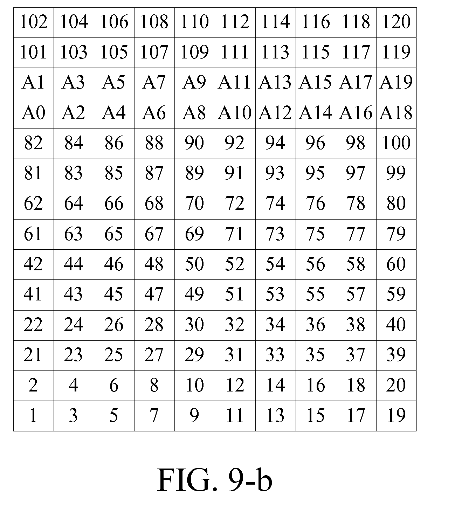

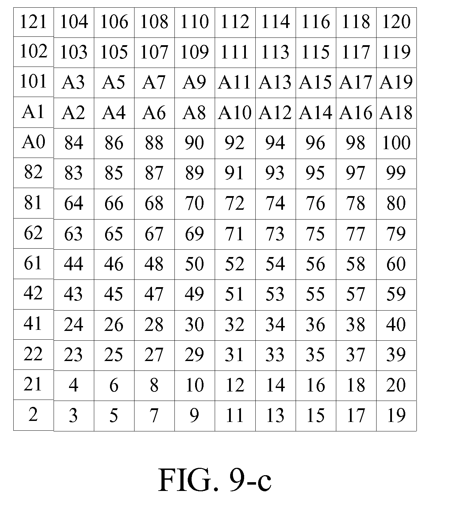

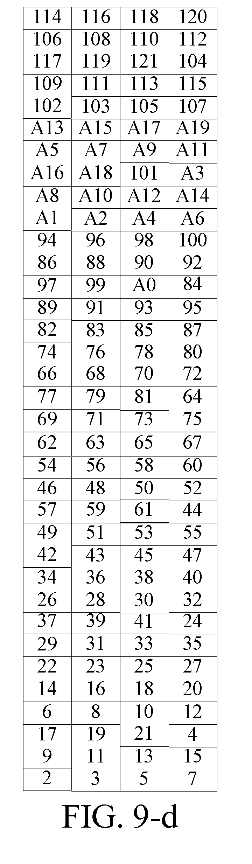

FIG. 9-b shows data on a CTBI at the sending end;
FIG. 9-c shows data received by an optical module at the sending end;
FIG. 9-d shows converted data at the sending end by bit;

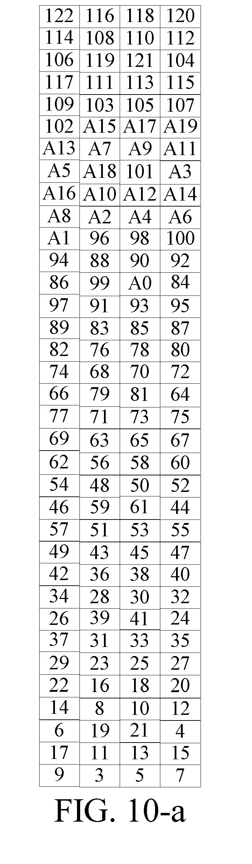

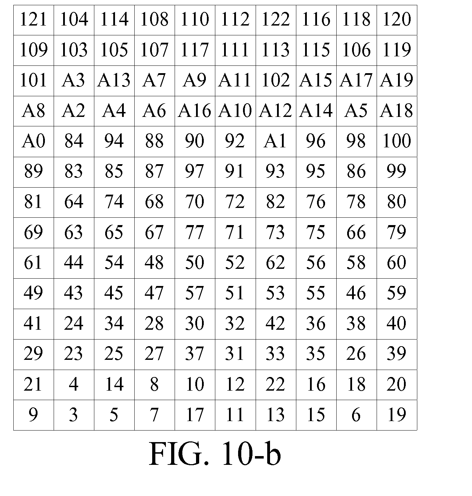

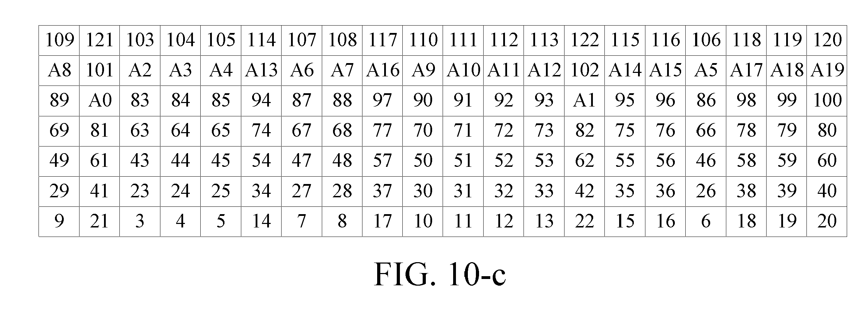

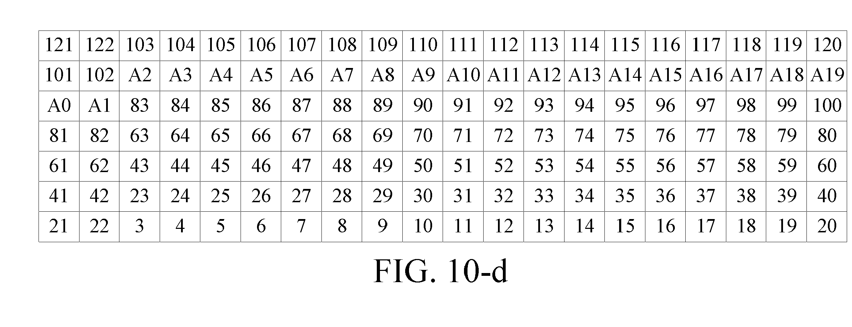

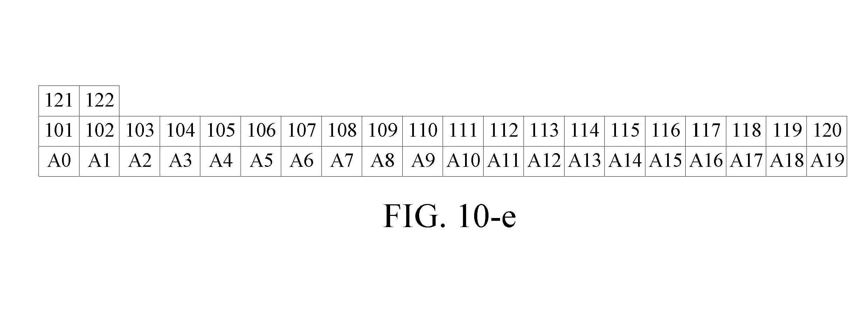

FIG. 10-a shows data modulated by an optical module at the receiving end;
FIG. 10-b shows data on a CTBI at the receiving end;
FIG. 10-c shows data on lanes of a VL set at the receiving end;
FIG. 10-d shows data after recovering the sequence of lanes of the VL set at the receiving end; and
FIG. 10-e shows data after compensating a transmission rate difference at the receiving end.

### DETAILED DESCRIPTION OF THE EMBODIMENTS

Embodiments of the present invention are described in detail with reference to the following figures.

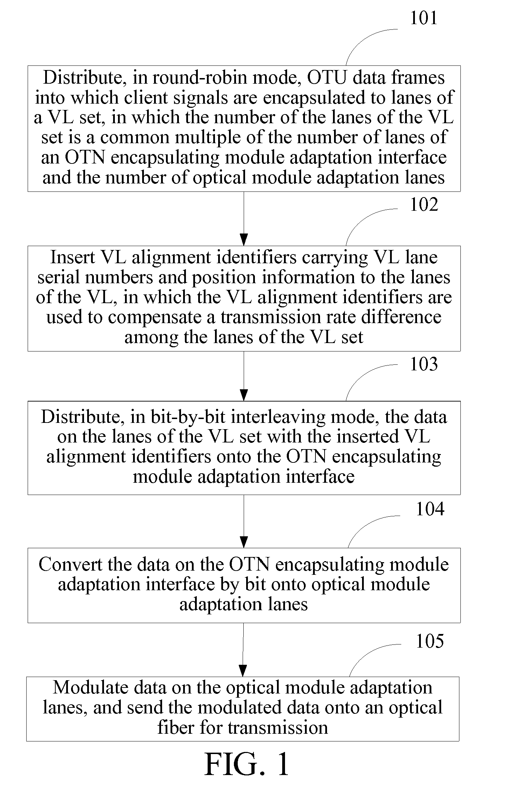

FIG. 1 is a flow chart of a method for sending client signals according to an embodiment of the present invention. As shown in FIG. 1, the method includes the following steps.

Step 101: Distribute, in round-robin mode, OTU data frames into which client signals are encapsulated onto lanes of a VL set, in which the number of lanes of the VL set is a common multiple of the number of lanes of an OTN encapsulating module adaptation interface and the number of optical module adaptation lanes;

Step 102: Insert VL alignment identifiers that carry VL lane serial numbers and position information to the lanes of the VL set, in which the VL alignment identifiers are used to compensate a transmission rate difference among the lanes of the VL set;

Step 103: Distribute, in bit-by-bit interleaving mode, the data on the lanes of the VL set with the inserted VL alignment identifiers onto the OTN encapsulating module adaptation interface;

Step 104: Convert the data on the OTN encapsulating module adaptation interface by bit onto optical module adaptation lanes;

Step 105: Modulate the data on the optical module adaptation lanes and send the modulated data onto an optical fiber for transmission.

As shown in the preceding embodiment of the prevent invention, at the sending end, according to the common multiple of the number of the lanes of the OTN encapsulating module adaptation interface and the number of the optical module adaptation lanes, the VL set with the number of lanes being the common multiple is created; the VL alignment identifiers that carry VL lane serial numbers and position information are inserted to the lanes of the VL set, and the data on the lanes of the VL set with the inserted VL alignment identifiers are distributed, in bit-by-bit interleaving mode, onto the lanes of the OTN encapsulating module adaptation interface; when the data on the OTN encapsulating module adaptation interface are converted by bit onto the optical module adaptation lanes, it is ensured that all bit data on one VL appear on one optical module adaptation lane. Thus, if transmission delay among physical lanes occurs in long-distance transport, data on one VL is not affected.

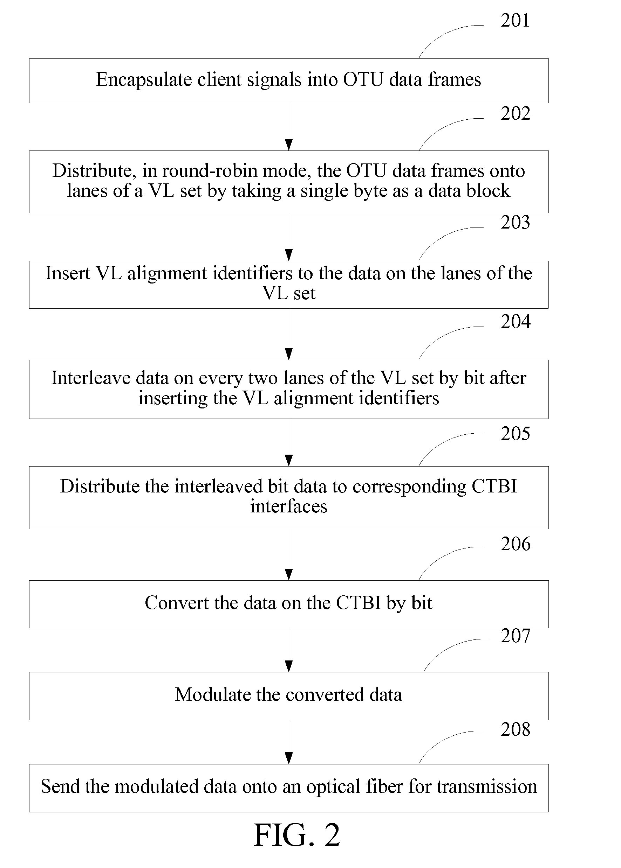

FIG. 2 is a flow chart of a method for sending client signals according to another embodiment of the present invention. In this embodiment, an OTN encapsulating module adaptation interface is a 100G 10bit Interface (CTBI), and the number of lanes of the CTBI is 10; the optical module applies the DQPSK modulating technology, so the number of lanes of the optical module adaptation lanes is 4. The detailed sending method includes the following steps:
Step 201: Encapsulate client signals into OTU data frames.

In this step, the OTN encapsulating module performs an OTN framing function, which encapsulates client signals such as Synchronous Digital Hierarchy (SDH) signals or Ethernet signals into OTU data frames and then outputs the frames.

Step 202: Distribute, in round-robin mode, the OTU data frames onto lanes of a VL set by using a single byte as a data block;

The VLs with the number of the least common multiple are created according to the least common multiple of the number of CTBI lanes and the number of lanes that is required for optical module modulation. In this embodiment, the number of the VLs is 20.

In this step, besides by taking a single byte as a data block during the process of distributing, in round-robin mode, the OTU data frames output from the OTN encapsulating module to 20 VLs, the OTU data frames may also be distributed to 20 VLs, in round-robin mode, by taking multiple consecutive bytes or non-consecutive bytes as a data block.

Step 203: Insert VL alignment identifiers to data on the lanes of the VL set;

The VL alignment identifiers are used to compensate the transmission rate difference at the receiving end. The source of the bandwidth for the VL alignment identifiers may be the existing overhead in the OTU data frames, or added bandwidth on the VLs. When the bandwidth on the VLs is increased for inserting the alignment identifiers, one alignment identifier may be added to every 10 OTU data frames.

Step 204: Interleave data on every two lanes of the VL set by bit after inserting the VL alignment identifiers;

For example, VL1 and VL2 correspond to data block A and data block B respectively; in this embodiment, A and B are data blocks with a single byte, in which A.0, A.1, A.2 ... A.7 are eight bits of data of the data block A, and B.0, B.1, B.2...are eight bits of data of the data block B. A.0, A.1, A.2...A.7 and B.0, B.1, B.2...B.7 are interleaved to obtain data of one lane, on which the data are A.0, B.0, A.1, B.1...A.7, B.7.

Step 205: Distribute the interleaved bit data to corresponding CTBI interfaces;

In this step, the interleaved bit data on VL1 and VL2 are distributed onto the first

CTBI interface, the interleaved bit data on VL3 and VL4 are distributed onto the second CTBI interface; and so on. Finally, the interleaved bit data on VL19 and VL20 are distributed onto the tenth CTBI interface.

Step 206: Convert the data on the CTBI by bit;

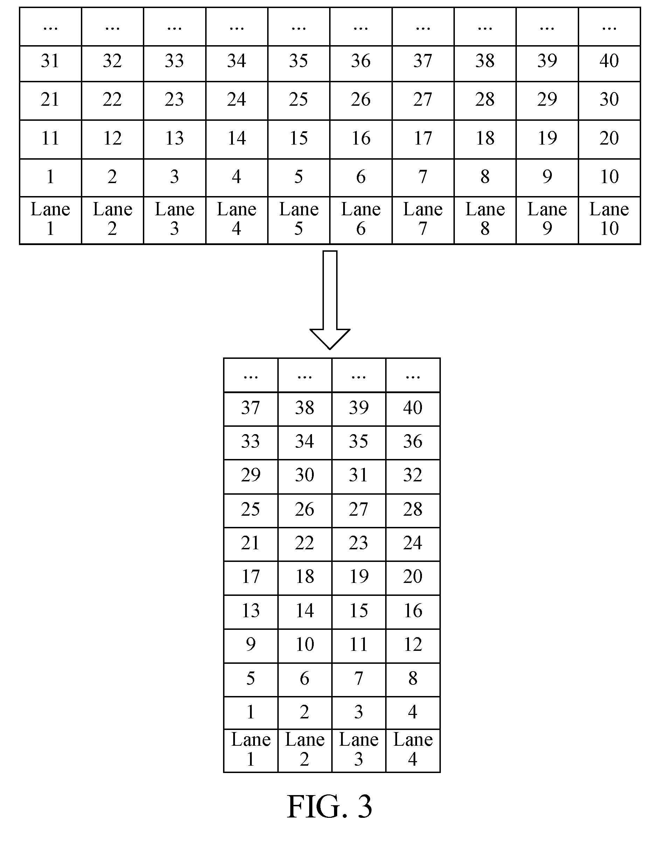

In this step, data on 10 lanes on the CTBI are converted by bit into data of 4 lanes in a 10:4 bit converting mode, as shown in FIG. 3. The 10:4 bit conversion is to distribute the bit data of 10 lanes on the CTBI to 4 lanes in round-robin mode.

Step 207: Modulate the converted data;

The main functions of the optical module are to modulate and convert electro-optical signals; at the sending end, the optical module receives electrical signals from the OTN encapsulating module, and converts the electrical signals into optical signals through modulating and encoding, and then transmits the modulated data onto the optical fiber for transmission.

Step 208: Transmit the modulated data onto the optical fiber for transmission.

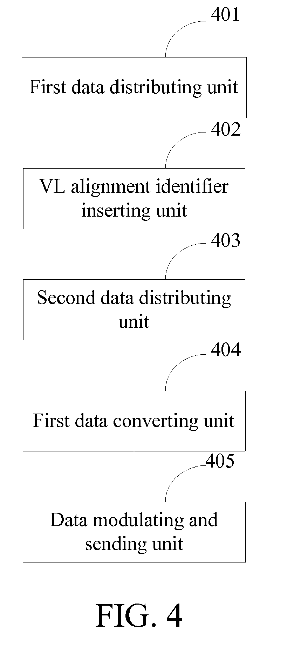

Corresponding to the method for sending client signals described above, in an embodiment, the present invention provides a device for sending client signals. As shown in FIG. 4, the device includes first data distributing unit 401, a VL alignment identifier inserting unit 402, a second data distributing unit 403, a first data converting unit 404 and a data modulating and sending unit 405. The internal structure and the connection relation of the device are described in detail with reference to the working principles of the device.

The first data distributing unit 401 is configured to distribute, in round-robin mode, OTU data frames into which client signals are encapsulated to lanes of a VL set, in which the number of the lanes of the VL set is a common multiple of the number of lanes of an OTN encapsulating module adaptation interface and the number of optical module adaptation lanes.

The VL alignment identifier inserting unit 402 is configured to insert VL alignment identifiers that carry VL lane serial numbers and position information to the lanes of the VL set, in which the VL alignment identifiers are used to compensate a transmission rate difference among the lanes of the VL set.

The second data distributing unit 403 is configured to distribute, in bit-by-bit interleaving mode, the data with the inserted VL alignment identifiers on the lanes of the VL set onto lanes of the OTN encapsulating module adaptation interface.

The first data converting unit 404 is configured to convert the data on the OTN encapsulating module adaptation interface by bit onto optical module adaptation lanes.

The data modulating and sending unit 405 is configured to modulate the data on the optical module adaptation lanes, and transmit the modulated data onto an optical fiber for transmission.

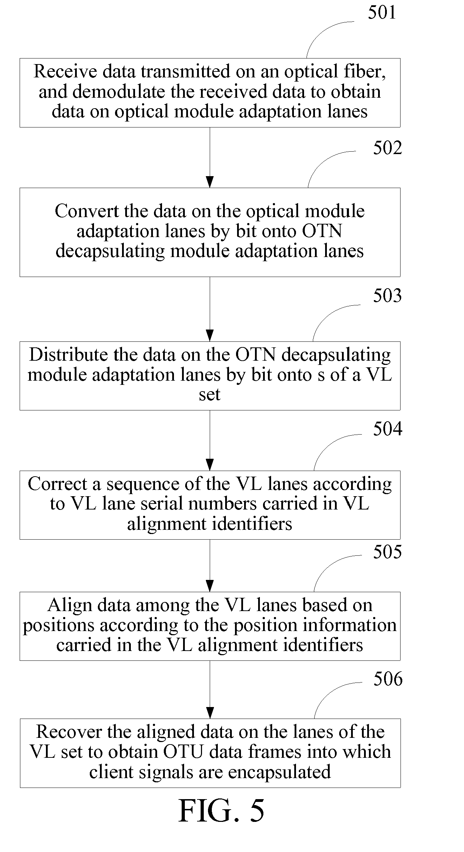

FIG. 5 is a flow chart of a method for receiving client signals according to an embodiment of the present invention. The method includes the following steps:
Step 501: Receive data transmitted on an optical fiber, and demodulate the received data to obtain data on optical module adaptation lanes;
Step 502: Convert the data on the optical module adaptation lanes by bit onto OTN decapsulating module adaptation lanes;
Step 503: Distribute the data on the OTN decapsulating module adaptation lanes onto lanes of a VL set by bit;
Step 504: Correct a sequence of the VL lanes according to VL lane serial numbers carried in VL alignment identifiers;
Step 505: Align data among the VL lanes by position according to the position information carried in the VL alignment identifiers;
Step 506: Recover the aligned data on the lanes of the VL set to obtain OTU data frames into which client signals are encapsulated.

In this embodiment, the receiving end receives data transmitted on the optical fiber, and demodulates the received data to obtain data on the optical module adaptation lanes; then, the data on the optical module adaptation lanes are converted by bit onto OTN decapsulating module adaptation lanes, and the data on the OTN decapsulating module adaptation lanes are distributed by bit onto the lanes of the VL set; when rate difference occurs due to transmission delay of the data received by the receiving end caused by the long-distance transmission, the receiving end can correct the sequence of VL lanes according to the VL lane serial numbers carried in the VL alignment identifiers inserted to the lanes of the VL set by the sending end; then, data among the VL lanes are aligned by position according to position information carried in the VL alignment identifiers to compensate the transmission rate difference caused by long-distance transmission; finally, the aligned data on the lanes of the VL set are recovered to obtain OTU data frames into which client signals are encapsulated.

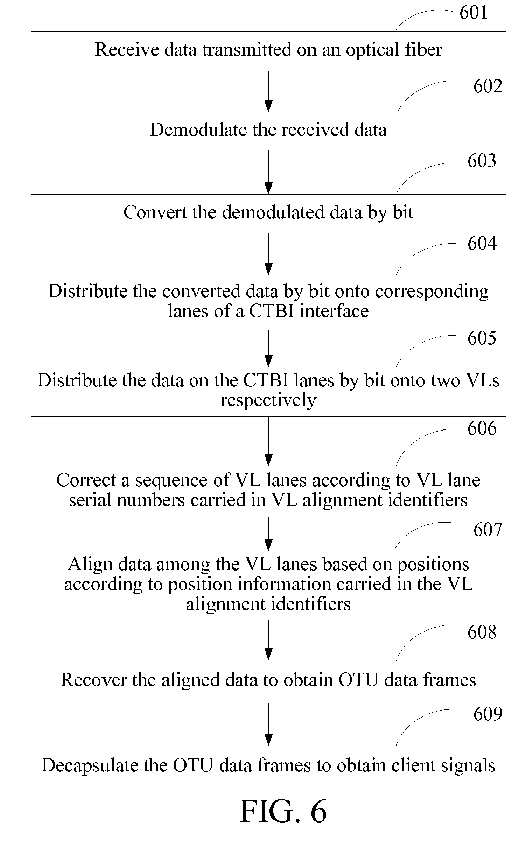

FIG. 6 is a flow chart of a method for receiving client signals according to another embodiment of the present invention. In this embodiment, an OTN decapsulating module adaptation interface is the CTBI, and the number of lanes of the CTBI is 10; an optical module applies the DQPSK demodulating technology, so the number of lanes of optical module adaptation lanes is 4. The detailed receiving method includes the following steps:
Step 601: Receive data transmitted on an optical fiber;
Step 602: Demodulate the received data;

The main function of the optical module is to convert electro-optical signals; at the receiving end, the optical module converts optical signal data into electrical signal data by demodulating and encoding. In this embodiment, the optical module applies the DQPSK demodulating technology, which requies 4 lanes; therefore, in this step, the electrical signal data of 4 lanes are obtained after demodulating by the optical module.

Step 603: Convert the demodulated data by bit.

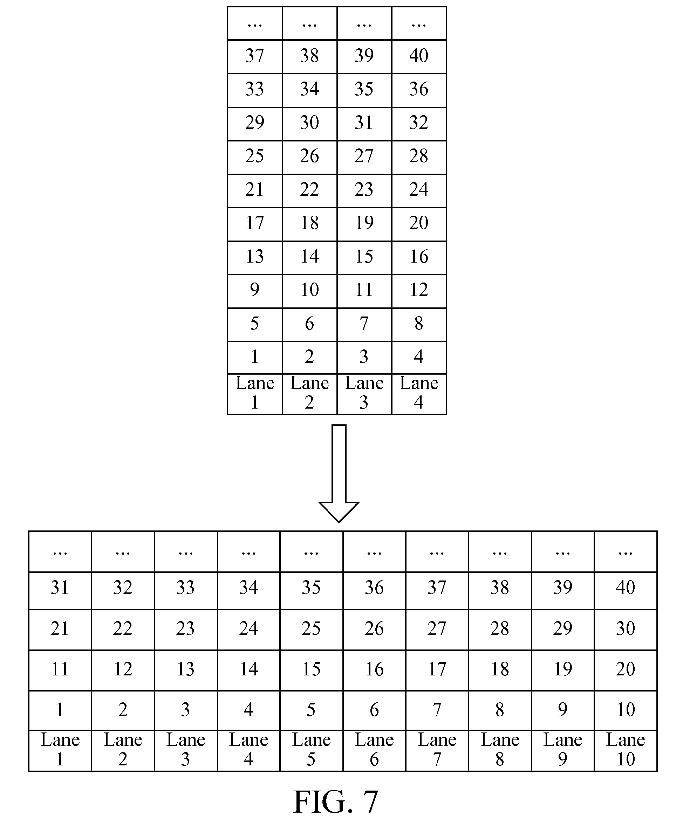

In this step, the data of 4 lanes on the CTBI are converted into data of 10 lanes in a 4:10 converting mode, as shown in FIG. 7; the 4:10 bit conversion is to distribute bit data of 4 lanes on the CTBI into 10 lanes in round-robin mode.

Step 604: Distribute the converted data onto corresponding lanes of the CTBI interface by bit;

Step 605: Distribute the data on the CTBI lanes by bit onto two VLs respectively;

For example, A.0, B.0, A.1, B.1...A.7, B.7 are data on the first CTBI interface, and the data on the interface are distributed by bit onto VL1 and VL2 respectively; thus, VL1 corresponds to a data block A (A.0, A.1, A.2...A.7), while VL2 corresponds to a data block B (B.0, B.1, B.2...B.7.). C.0, D.0, C.1, D.1...C.7, D.7 are data on the second interface, and the data on the interface are distributed by bit to VL3 and VL4 respectively; thus, VL3 corresponds to a data block C (C.0, C.1, C.2 ... C.7), while VL4 corresponds to a data block D (D.0, D.1, D.2...D.7). In this embodiment, A, B, C and D are data blocks with a single byte.

Step 606: Correct a sequence of VL lanes according to VL lane serial numbers carried in VL alignment identifiers;

Step 607: Align data among VL lanes by position according to position information carried in the VL alignment identifiers;

In this step, besides executing step 606 first and then executing step 607, it is also allowed to execute step 607 first and then execute step 606. That is, the data among VL lanes are aligned by position according to the position information carried in the VL alignment identifiers first, and then, the sequence of the VL lanes is corrected according to VL lane serial numbers carried in the VL alignment identifiers.

Step 608: Recover the aligned data into OTU data frames;

Step 609: Decapsulate the OTU data frames to obtain client signals.

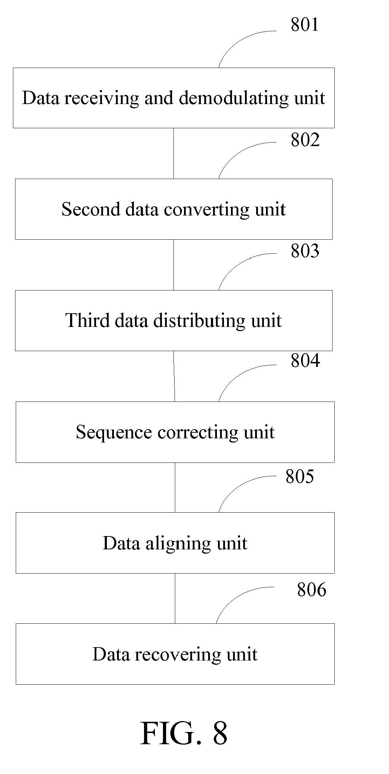

Corresponding to the method for receiving client signals described above, in an embodiment, the present invention provides a device for receiving client signals. As shown in FIG. 8, the device includes a data receiving and demodulating unit 801, a second data converting unit 802, a third data distributing unit 803, a sequence correcting unit 804, a data aligning unit 805 and a data recovering unit 806. The internal structure and the connection relation of the device are described in detail with reference to the working principles of the device.

The data receiving and demodulating unit 801 is configured to receive data transmitted on an optical fiber, and demodulate the received data to obtain data on optical module adaptation lanes;

The second data converting unit 802 is configured to convert the data on the optical module adaptation lanes by bit onto OTN decapsulating module adaptation lanes;

The third data distributing unit 803 is configured to distribute the data on the OTN decapsulating module adaptation lanes by bit onto lanes of a VL set;

The sequence correcting unit 804 is configured to correct a sequence of the lanes of the VL set according to VL lane serial numbers carried in VL alignment identifiers;

The data aligning unit 805 is configured to align data among the lanes of the VL set by position according to position information carried in the VL alignment identifiers;

The data recovering unit 806 is configured to recover the aligned data on the lanes of the VL set into OTU data frames into which client signals are encapsulated.

The present invention also provides a first embodiment of a system for transmitting client signals, including the device for sending and device for receiving described above, which have been described in detail above, and therefore is not described again here.

Beneficial effects of the embodiments of the present invention are described in detail with reference to the entire data transmission process. According to the preceding embodiments, at the sending end, the OTU data frames are distributed in round-robin mode to each lane of a VL set by taking a single byte as a data block, and data on each lane of the VL set are shown in FIG. 9-a, in which each grid represents one bit data, A0∼A19 represents VL alignment identifiers on each lane of the VL set; after interleaving data on each lane of the VL set by bit, the interleaved data are distributed to corresponding CTBI interfaces, as shown in FIG. 9-b. In the process for transmitting data to the optical module through the CTBI interfaces, a data transmission rate difference is generated, and the transmission rate difference is generated among various lanes of the CTBI interface, that is, data on the first lane are transmitted at a higher rate than those on other lanes, and thus the data received by the optical module are shown in FIG. 9-c. The data received by the optical module are converted in 10:4 mode by bit, that is, data on 10 lanes of the CTBI interface are converted into data on 4 lanes adapted by the optical module, and the converted data are shown in FIG. 9-d. The converted data are transmitted on an optical fiber after being modulated by the optical module. A transmission rate difference is generated again in the transmission process, that is, data on the first lane are transmitted at a higher rate than data on other channels, and the data received at the receiving end are then demodulated by the optical module, as shown in FIG. 10-a. The demodulated data are converted in 4:10 mode by bit, the converted data on 10 lanes are distributed onto corresponding lanes of the CTBI, and the data on corresponding CTBI lanes are shown in FIG 10-b. The data on the CTBI are distributed by bit onto two VLs respectively, and the data on the VLs are shown in FIG. 10-c. As the transmission data difference is generated, data received at the receiving end has become totally different from data sent from the sending end. The receiving end recovers the correct lane sequence according to VL lane serial numbers carried in the VL alignment identifiers, as shown in FIG. 10-d. Then, the receiving end aligns data among the VL lanes by position according to position information carried in the VL alignment identifiers to compensate the transmission rate difference among lanes generated during long-distance transmission, as shown in FIG. 10-e. At this time, the data are identical to data sent from the sending end. Finally, the aligned data are recovered to obtain OTU data frames, and client signals sent from the sending end are obtained by decapsulating the OTU data frames.

It should be noted that the preceding descriptions are merely preferred embodiments of the present invention, and person having ordinary skill in the art may make various improvements and refinements without departing from the principle of the invention. All such modifications and refinements are intended to be covered by the present invention.

## Claims

1. A method for sending client signals, comprising:
distributing, in round-robin mode, Optical Channel Transport Unit (OTU) data frames into which client signals are encapsulated to Virtual Lanes (VLs), wherein the number of lanes of the VLs is a common multiple of the number of lanes of an Optical Transport Network (OTN) encapsulating module adaptation interface and the number of optical module adaptation lanes;
inserting VL alignment identifiers that carry VL serial numbers and position information to the VLs, wherein the VL alignment identifiers are used to a compensate transmission rate difference among the VLs;
distributing, in bit-by-bit interleaving mode, data on the VLs with the inserted VL alignment identifiers onto lanes of the OTN encapsulating module adaptation interface;
converting the data on the OTN encapsulating module adaptation interface by bit onto the optical module adaptation lanes; and
modulating the data on the optical module adaptation lanes, and sending the modulated data onto an optical fiber for transmission.

2. The method according to claim 1, wherein the distributing, in round-robin mode, the OTU data frames onto the VLs comprises:
taking a single byte as a unit to distribute the OTU data frames onto the VLs in round-robin mode.

3. The method according to claim 1, wherein the distributing the OTU data frames onto the VLs in round-robin mode comprises:
taking multiple consecutive bytes as a unit to distribute the OTU data frames onto the VLs in round-robin mode.

4. The method according to claim 1, wherein the distributing the OTU data frames onto the VLs in round-robin mode comprises:
taking multiple non-consecutive bytes as a unit to distribute the OTU data frames onto the VLs in round-robin mode.

5. The method according to claim 1, wherein the inserting the VL alignment identifiers that carry the VL serial numbers and the position information to the VLs comprises:
inserting the VL alignment identifiers to existing overhead of the OTU data frames on the VLs.

6. The method according to claim 1, wherein the inserting the VL alignment identifiers that carry the VL serial numbers and the position information to the VLs comprises:
increasing bandwidth of a VL set, and inserting the VL alignment identifiers to the increased bandwidth.

7. The method according to claim 1, wherein the converting the data on the OTN encapsulating module adaptation interface by bit onto the optical module adaptation lanes comprises:
distributing, in round-robin mode, the data on the OTN encapsulating module adaptation interface by bit onto the optical module adaptation lanes.

8. A method for receiving client signals, comprising:
receiving data transmitted on an optical fiber, and demodulating the received data to obtain data on optical module adaptation lanes;
converting the data on the optical module adaptation lanes by bit onto Optical Transport Network (OTN) decapsulating module adaptation lanes;
distributing the data on the OTN decapsulating module adaptation lanes onto Virtual Lanes (VLs) by bit;
correcting a sequence of the VLs according to VL serial numbers carried in VL alignment identifiers;
aligning data among the VLs by position according to position information carried in the VL alignment identifiers; and
recovering the aligned data on the VLs to obtain Optical Channel Transport Unit (OTU) data frames into which client signals are encapsulated.

9. A device for sending client signals, comprising:
a first data distributing unit, configured to distribute, in round-robin mode, Optical Channel Transport Unit (OTU) data frames into which client signals are encapsulated onto Virtual Lanes (VLs), wherein the number of the VLs is a common multiple of the number of lanes of an Optical Transport Network (OTN) encapsulating module adaptation interface and the number of optical module adaptation lanes;
a VL alignment identifier inserting unit, configured to insert VL alignment identifiers that carry VL serial numbers and position information to the VLs, wherein the VL alignment identifiers are used to compensate a transmission rate difference among the VLs;
a second data distributing unit, configured to distribute, in bit-by-bit interleaving mode, data on the VLs with the inserted VL alignment identifiers onto lanes of the OTN encapsulating module adaptation interface;
a first data converting unit, configured to convert the data on the OTN encapsulating module adaptation interface by bit onto the optical module adaptation lanes; and
a data modulating and sending unit, configured to modulate the data on the optical module adaptation lanes, and send the modulated data onto an optical fiber for transmission.

10. The device according to claim 9, wherein the first data distributing unit comprises:
a first setting unit, configured to set the OTU data frames in a unit of a single byte; and
a first round-robin distributing unit, configured to distribute, in round-robin mode, the OTU data frames set by the first setting unit onto the VLs.

11. The device according to claim 9, wherein the first data distributing unit comprises:
a second setting unit, configured to set the OTU data frames in a unit of multiple consecutive bytes; and
a second round-robin distributing unit, configured to distribute, in round-robin mode, the OTU data frames set by the second setting unit onto the VLs.

12. The device according to claim 9, wherein the first data distributing unit comprises:
a third setting unit, configured to set the OTU data frames in a unit of multiple non-consecutive bytes; and
a third round-robin distributing unit, configured to distribute, in round-robin mode, the OTU data frames set by the third setting unit onto the VLs.

13. The device according to claim 9, wherein the VL alignment identifier inserting unit comprises:
an overhead obtaining unit, configured to obtain existing overhead of the OTU data frames on lanes of a VL set; and
a first inserting unit, configured to insert the VL alignment identifiers to the overhead obtained by the overhead obtaining unit.

14. The device according to claim 9, wherein the VL alignment identifier inserting unit comprises:
a bandwidth increasing unit, configured to increase bandwidth of a VL set; and
a second inserting unit, configured to insert the VL alignment identifiers to the bandwidth increased by the bandwidth increasing unit.

15. A device for receiving client signals, comprising:
a data receiving and demodulating unit, configured to receive data transmitted on an optical fiber, and demodulate the received data to obtain data on optical module adaptation lanes;
a second data converting unit, configured to convert the data on the optical module adaptation lanes by bit onto Optical Transport Network (OTN) decapsulating module adaptation lanes;
a third data distributing unit, configured to distribute the data on the OTN decapsulating module adaptation lanes onto Virtual Lanes (VLs) by bit;
a sequence correcting unit, configured to correct a sequence of the VLs according to VL serial numbers carried in VL alignment identifiers;
a data aligning unit, configured to align data among the VLs by position according to position information carried in the VL alignment identifiers; and
a data recovering unit, configured to recover the aligned data on the VLs to obtain Optical Channel Transport Unit (OTU) data frames into which client signals are encapsulated.

16. A system for transmitting client signals, comprising the device for sending according to any one of claims 9 to 14 and the device for receiving according to claim 15.
